# EUROPEAN PATENT SPECIFICATION

(11) **EP 4 089 027 B1**
(45) Date of publication and mention of the grant of the patent: **23.10.2024**
(21) Application number: 21769008.0
(22) Date of filing: 03.03.2021
(51) Int. Cl.: C09D 167/02, B65D 25/36, B32B 15/09

(54) **RESIN-COATED METAL SHEET FOR CONTAINERS**
HARZBESCHICHTETE METALLPLATTE FÜR BEHÄLTER
PLAQUE MÉTALLIQUE REVÊTUE DE RÉSINE POUR RÉCIPIENTS

(30) Priority: 11.03.2020 JP 2020041697
(43) Date of publication of application: 16.11.2022
(73) Proprietor: JFE Steel Corporation, Tokyo 100-0011 (JP)
(72) Inventor: KAWAI Yuya, Tokyo 100-0011 (JP); KITAGAWA Junichi, Tokyo 100-0011 (JP); OSHIMA Yasuhide, Tokyo 100-0011 (JP)
(74) Representative: Hoffmann Eitle
(86) International application number: PCT/JP2021/008284
(87) International publication number: WO 2021/182256

(56) References cited:
- EP-A1- 1 288 261
- WO-A1-2016/136099
- WO-A1-2019/116707
- JP-A- 2005 132 072
- JP-A- 2017 030 210

## Description

### Technical Field

The present invention relates to a resin-coated metal sheet for containers, the resin-coated metal sheet including a metal sheet and a resin coating layer on at least one surface of the metal sheet.

### Background Art

Generally, metal containers are roughly categorized into two-piece cans and three-piece cans. A two-piece can is a metal container constituted by two parts: a lid and a can body integral with a can bottom, or a can bottom and a can body integral with a can lid. Meanwhile, a three-piece can is a metal container constituted by three parts: a can barrel, a top lid, and a bottom lid. A two-piece can has no welded parts in the can body and thus has good appearance; however, typically, a high degree of processing is required.

Typically, metal sheets, such as tin-free steel (TFS) and aluminum, used as raw material for metal containers have been coated in order to improve corrosion resistance. However, the issues with the coating are that it requires a long processing time for complicated coating and baking steps and that emission of large quantities of solvents and carbon dioxide puts a heavy load on the environment. To address these issues, resin-coated metal sheets for containers having thermoplastic films on metal surfaces have been developed, and are currently widely industrially used mainly as beverage can raw material.

Patent Literatures 1 to 3 disclose a technology of producing a two-piece can by a drawing method or a draw & ironing (DI) method using, as a raw material, a resin-coated metal sheet that has resin coating layers on both surfaces of a metal sheet. Furthermore, Patent Literatures 4 and 5 disclose a technology of adding a white pigment to a resin coating layer to be positioned on an outer surface side of a formed metal container in order to allow for a process, such as printing, that enhances the designability of the can body. EP 1 288 261 A1 discloses coating composition for steel sheets used in the preparation of containers comprising PBT and PET. The coating is applied in a way that results in the polyesters being in an amorphous state.

As the shapes of can bodies have become increasingly diverse in recent years, the needs for increasing the degree of processing of can bodies have grown. While the number of can bodies that can be stored per unit area can be increased by decreasing the can diameter and increasing the can height, resin-coated metal sheets are more severely processed as the degree of processing increases.

### Citation List

### Patent Literature

PTL 1: Japanese Unexamined Patent Application Publication No. 2-303634
PTL 2: Japanese Unexamined Patent Application Publication No. 4-91825
PTL 3: Japanese Unexamined Patent Application Publication No. 2004-148324
PTL 4: Japanese Unexamined Patent Application Publication No. 8-169098
PTL 5: Japanese Unexamined Patent Application Publication No. 2004-130536
PTL 6: WO2013/030972

### Summary of Invention

### Technical Problem

When producing a two-piece can body that involves a high degree of processing by using a resin-coated metal sheet, in order to increase the adhesion between the resin coating and the metal sheet and to improve the coating property of the resin coating layer positioned on the can inner surface side, a heat treatment is performed at around the melting point of the resin coating layer after the processing. However, it has been found that, as the degree of processing performed on the two-piece can increases, wrinkle defects are generated in the resin coating layer during the heat treatment performed after the can-making process. Thus, when a two-piece can body that requires a high degree of processing is to be made by using a resin-coated metal sheet, wrinkle defects generated during the heat treatment after the can-making process need to be suppressed.

Typically, crystalline, rigid amorphous, and mobile amorphous fractions coexist in a resin coating layer, and the ratios thereof can be calculated by calorimetry. Patent Literature 6 introduces a technology of controlling the crystallinity of a resin coating layer, which is determined from the difference between the heat of crystallization and the heat of melting, so as to decrease the residual stress after the forming process and suppress appearance defects (dotted pattern) caused by the heat treatment after the can-making process. However, wrinkle defects generated during the heat treatment after the can-making process still occur even when the crystallinity is decreased to be in the range of crystallinity disclosed in Patent Literature 6 (difference between heat of crystallization and heat of melting: 20 J/g or less ≈ crystalline content of 14% or less); thus, wrinkle defects cannot be suppressed by controlling the crystallinity.

The present invention has been made under the circumstances described above, and an object thereof is to provide a resin-coated metal sheet for containers, which exhibits excellent formability during the two-piece can-making process that involves a high degree of processing and on which wrinkle defects are not generated by a post-process heat treatment.

### Solution to Problem

The inventors of the present invention have conducted extensive studies and found that the wrinkle defects that are generated during the heat treatment after the can-making process are caused by coexistence of rigid phases (crystalline and rigid amorphous fractions) and soft phases (mobile amorphous fractions)in the resin coating layer. When rigid phases (crystalline and rigid amorphous fractions) and soft phases (mobile amorphous fractions) coexist in a resin coating layer, inhomogeneous strain occurs in the resin coating layer upon deformation during the can-making process involving a high degree of processing. As a result, during the heat treatment after the can-making process, the resin coating layer that has been softened by being heated to near the melting point deforms unevenly, thereby generating wrinkle defects.

The inventors of the present invention have studied further on the basis of the aforementioned findings. As a result, the inventors have found that adjusting the ratio of the mobile amorphous fractions in the resin coating layer to a particular value or higher suppresses inhomogeneous strain in the resin coating layer generated during the can-making process, and thus it becomes possible to suppress wrinkle defects generated during the heat treatment after the can-making process.

The present invention has been made on the basis of the aforementioned findings and is summarized as follows.
[1] A resin-coated metal sheet for containers, the resin-coated metal sheet including a metal sheet and a resin coating layer on at least one surface of the metal sheet, in which the resin coating layer on the at least one surface contains a resin material that contains 90 mol% or more of an ethylene terephthalate unit and that has a mobile amorphous content of 80% or more.
[2] The resin-coated metal sheet for containers described in [1], in which the resin coating layer on the at least one surface contains 0.010 mass% or more and 1.5 mass% or less of lubricant components.
[3] The resin-coated metal sheet for containers described in [1] or [2], in which the resin coating layer on the at least one surface contains 30 mass% or less of inorganic pigments.
[4] The resin-coated metal sheet for containers described in [3], in which the resin coating layer on the at least one surface has a structure formed of at least three layers, which are an outermost surface layer, an intermediate layer, and a bottom layer, the outermost surface layer and the bottom layer each have a thickness of 1.0 µm or more and 5.0 µm or less, the intermediate layer has a thickness of 6.0 µm or more and 30 µm or less, the outermost surface layer and the bottom layer each contain 0 mass% or more and 2.0 mass% or less of the inorganic pigments, and the intermediate layer contains 10 mass% or more and 30 mass% or less of the inorganic pigments.

### Advantageous Effects of Invention

According to the present invention, there can be provided a resin-coated metal sheet for containers, which exhibits excellent formability during a two-piece can-making process that involves a high degree of processing and on which wrinkle defects are not generated by a post-process heat treatment.

### Brief Description of Drawings

[Fig. 1] Fig. 1 is a cross-sectional view illustrating a structure of a resin-coated metal sheet for containers according to one embodiment of the present invention.
[Fig. 2] Fig. 2 is a cross-sectional view illustrating a structure of a resin-coated metal sheet for containers according to another embodiment of the present invention. Description of Embodiments

A resin-coated metal sheet for containers , which is one embodiment of the present invention, will now be described.

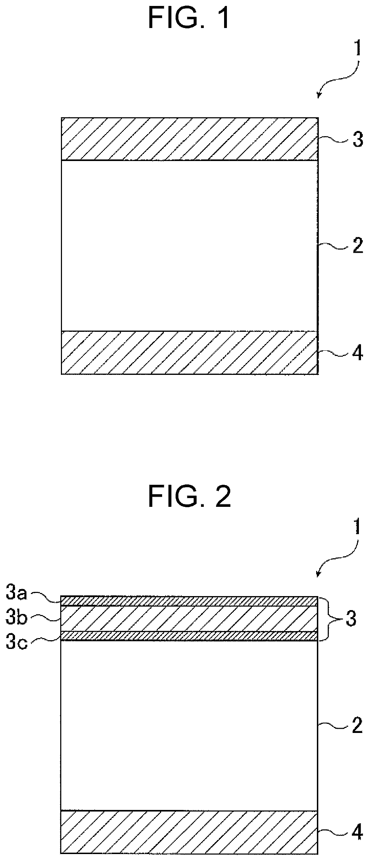

Fig. 1 is a cross-sectional view illustrating a structure of a resin-coated metal sheet for containers according to one embodiment of the present invention. As illustrated in Fig. 1, a resin-coated metal sheet 1 for containers according to one embodiment of the present invention includes a metal sheet 2, a resin coating layer 3 formed on a front surface side of the metal sheet 2, and a resin coating layer 4 formed on a rear surface side of the metal sheet 2. The resin coating layer 3 and the resin coating layer 4 are to be respectively positioned on an outer surface side and an inner surface side of a metal container after forming.

The metal sheet 2 is formed of a steel sheet such as tin or tin-free steel. Tin having a coating weight in the range of 0.5 g/m² or more and 15 g/m² or less is preferably used as the tin. The tin-free steel preferably has, on its surfaces, a metallic chromium layer having a coating weight of 50 mg/m² or more and 200 mg/m² or less and a chromium oxide layer having a coating weight of 3 mg/m² or more and 30 mg/m² or less on a metallic chromium basis. The type of the steel sheet is not particularly specified as long as the steel sheet can be formed into an intended shape, but the steel sheet preferably has the following components and is preferably produced by the following method.

(1) A steel sheet that has been subjected to recrystallization annealing by continuously annealing a low-carbon steel having a carbon (C) content of about more than 0.003 mass% and 0.10 mass% or less.
(2) A steel sheet that has been subjected to recrystallization annealing and overaging by continuously annealing a low-carbon steel having a C content of about more than 0.003 mass% and 0.10 mass% or less.
(3) A steel sheet that has been subjected to recrystallization annealing by box-annealing a low-carbon steel having a C content of about more than 0.003 mass% and 0.10 mass% or less.
(4) A steel sheet that has been subjected to recrystallization annealing by continuously annealing or box-annealing a low-carbon steel having a C content of about more than 0.003 mass% and 0.10 mass% or less, and then subjected to secondary cold-rolling (double reduced (DR) rolling).
(5) A steel sheet that has been subjected to recrystallization annealing by continuously annealing an interstitial-free (IF) steel obtained by adding a dissolved-C-fixing element, such as Nb or Ti, to an ultra-low-carbon steel having a C content of about 0.003 mass% or less.

The mechanical properties of the steel sheet are not particularly limited as long as the steel sheet can be formed into an intended shape. In order to maintain sufficient can body strength without degrading the workability, a steel sheet having a yield point (YP) of 220 MPa or more and 580 MPa or less is preferably used. In addition, the Lankford coefficient (r value), which is the indicator of the plastic anisotropy, is preferably 0.8 or more. The planar anisotropy Δr of the r value is preferably 0.7 or less in terms of absolute value.

The components of the steel for achieving the aforementioned properties are not particularly limited, and, for example, components such as Si, Mn, P, S, Al, and N may be contained. The Si content is preferably 0.001 mass% or more and 0.1 mass% or less, the Mn content is preferably 0.01 mass% or more and 0.6 mass% or less, the P content is preferably 0.002 mass% or more and 0.05 mass% or less, the S content is preferably 0.002 mass% or more and 0.05 mass% or less, the Al content is preferably 0.005 mass% or more and 0.100 mass% or less, and the N content is preferably 0.0005 mass% or more and 0.020 mass% or less. In addition, other components such as Ti, Nb, B, Cu, Ni, Cr, Mo, and V may be contained; however, from the viewpoint of securing corrosion resistance etc., the total content of these components is preferably 0.02 mass% or less.

In the present invention, at least the resin coating layer 3 (the resin coating layer on the outer surface side of a container to be obtained by forming) on one surface is formed of a resin material containing 90 mol% or more of an ethylene terephthalate unit. Specifically, the resin coating layer 3 is formed of a polyester containing 90 mol% or more of an ethylene terephthalate unit constituting polyethylene terephthalate formed of terephthalic acid as a carboxylic acid component and ethylene glycol as a glycol component. When inorganic additives (such as titanium oxide) are contained in the resin coating layer 3, the ratio of the ethylene terephthalate unit in the resin material excluding the weight of such inorganic additives is 90 mol% or more. Preferably, the resin material contains 92 mol% or more of the ethylene terephthalate unit. When the molar concentration of the ethylene terephthalate unit is less than 90 mol%, the resin softens due to the heat applied during the continuous can-making process, and the resin coating layer 3 may become fractured or scraped.

As long as heat resistance and workability are not impaired, multiple dicarboxylic acid components and glycol components other than terephthalic acid and ethylene glycol may be copolymerized and used as a resin material constituting the resin coating layer 3. Examples of the dicarboxylic acid component include aromatic dicarboxylic acids such as isophthalic acid, naphthalenedicarboxylic acid, diphenyldicarboxylic acid, diphenylsulfonedicarboxylic acid, diphenoxyethanedicarboxylic acid, 5-sodium sulfoisophthalic acid, and phthalic acid, aliphatic dicarboxylic acids such as oxalic acid, succinic acid, adipic acid, sebacic acid, dimer acid, maleic acid, and fumaric acid, alicyclic dicarboxylic acids such as cyclohexanedicarboxylic acid, and oxycarboxylic acids such as p-oxybenzoic acid. Examples of the glycol component include aliphatic glycols such as propanediol, butanediol, pentanediol, hexanediol, and neopentyl glycol, alicyclic glycols such as cyclohexanedimethanol, aromatic glycols such as bisphenol A and bisphenol S, and diethylene glycol.

The resin material forming the resin coating layer 3 is not limited by the production method. For example, the resin material can be formed by (1) a method that involves esterifying terephthalic acid, ethylene glycol, and copolymer components and then performing polycondensation of the resulting reaction product to obtain a copolymer polyester or (2) a method that involves transesterifying dimethyl terephthalate, ethylene glycol, and copolymer components and then performing polycondensation reaction of the resulting reaction product to obtain a copolymer polyester. Furthermore, when producing the polyester, additives such as a fluorescent whitening agent, an antioxidant, a heat stabilizer, a UV absorber, and an antistatic material may be added.

Furthermore, the resin coating layer 3 is formed of a resin material that has a mobile amorphous content of 80% or more. When mobile amorphous fractions, which are soft phases, account for 80% or more of the resin material constituting the resin coating layer 3, inhomogeneous strain generated during the can-making process can be suppressed, and wrinkle defects generated during the heat treatment after the can-making process can be suppressed. Preferably, the mobile amorphous content in the resin coating layer 3 is 85% or more. More preferably, the mobile amorphous content in the resin coating layer 3 is 85% or more and 98% or less. When the mobile amorphous content is 98% or less, rigid phases can be securely obtained in the resin coating layer, and thus better impact resistance can be obtained. When inorganic additives (such as an inorganic pigment) are contained in the resin coating layer 3, the mobile amorphous content in the resin material excluding the weight of such inorganic additives needs to be 80% or more. Note that the mobile amorphous content in the present invention can be calculated from the difference in specific heat for the glass transition point obtained by temperature-modulated differential scanning calorimetry as described in the examples below.

The resin-coated metal sheet 1 is obtained by press-bonding resin coating layers 3 and 4 on the front and rear surfaces of the metal sheet 2 heated to a temperature higher than or equal to the melting point of the resin coating layers 3 and 4 by using a laminating roller, and then cooling the resulting product. The mobile amorphous content in the resin coating layer 3 can be adjusted by changing the temperature of the metal sheet 2 after press-bonding and the time for which the metal sheet 2 after the press-bonding is held at a temperature higher than or equal to the melting onset temperature of the resin coating layer 3.

In order to achieve the mobile amorphous content of the present invention, after the resin coating layer 3 is press-bonded to the metal sheet 2, the metal sheet 2 needs to be held at a temperature higher than or equal to the melting onset temperature of the resin coating layer 3 for 0.50 seconds or more and 3.0 seconds or less and then be quenched such as by water quenching. When the time for which the metal sheet 2 is held at a temperature higher than or equal to the melting onset temperature of the resin coating layer 3 after the resin coating layer 3 is press-bonded to the metal sheet 2 is less than 0.50 seconds, melting of the resin coating layer is insufficient, and the mobile amorphous content of the present invention cannot be yielded. When the time for which the metal sheet 2 is held at a temperature higher than or equal to the melting onset temperature of the resin coating layer 3 after the resin coating layer 3 is press-bonded to the metal sheet is more than 3.0 seconds, the production line becomes long, and the productivity is severely degraded. Furthermore, since the metal sheet 2 is allowed to naturally cool even after press bonding, the temperature of the metal sheet 2 during press bonding needs to be prominently high in order to hold, for more than 3.0 seconds, the metal sheet 2 at a temperature higher than or equal to the melting onset temperature of the resin coating layer 3 after press-bonding of the resin coating layer 3 onto the metal sheet 2. In such a case, the resin coating layer 3 becomes melted and adheres to the laminate roll. Thus, the time for which the metal sheet after the resin coating layer 3 is press-bonded to the metal sheet 2 is held at a temperature higher than or equal to the melting onset temperature of the resin coating layer 3 is preferably 3.0 seconds or less.

When the metal sheet 2 is held at a temperature higher than or equal to the melting onset temperature of the resin coating layer 3 and is then allowed to naturally cool to a temperature less than the melting onset temperature, rigid phases (crystalline and rigid amorphous fractions) are generated in the resin coating layer, and the mobile amorphous content of the present invention cannot be obtained. Thus, after the resin coating layer 3 is held at a temperature higher than or equal to the melting onset temperature, quenching must be performed by, for example, water quenching. Here, quenching means performing cooling at a cooling rate of 150°C/second or more from the melting onset temperature to 100°C. Preferably, the cooling rate is 200°C/second or more.

Examples of the method for increasing the temperature of the metal sheet 2 after the resin coating layer 3 is press-bonded thereto include a method that involves increasing the heating temperature of the metal sheet 2 before press bonding, a method that involves decreasing the pressure of the laminate roll during press bonding, and a method that involves increasing the temperature of the laminate roll during press bonding. In order to achieve the mobile amorphous content targeted by the present invention, the heating temperature of the metal sheet 2 is preferably about 20°C to 50°C higher than the melting point of the resin coating layer 3. Moreover, decreasing the pressing pressure of the roll during press bonding can mitigate the cooling effect of the roll during press bonding and can keep the metal sheet temperature high after press bonding. Moreover, the higher the temperature of the laminate roll, the smaller the cooling effect of the roll during press bonding, and thus the metal sheet temperature after press bonding can be kept high. However, when the temperature of the laminate roll is 60°C or more higher than the glass transition point of the resin coating layer 3, the resin coating layer 3 softens, the roughness of the laminate roll is transferred to the resin coating layer 3, and thus appearance defects are generated. Thus, the temperature of the laminate roll needs to be lower than or equal to a temperature 60°C higher than the glass transition point of the resin coating layer 3.

For the purpose of decreasing the frictional coefficient during the can-making process, the resin coating layer 3 may contain 0.010 mass% or more and 1.5 mass% or less of lubricant components. At lubricant components content of 0.010 mass% or more, sufficient slidability with a die is obtained during the can-making process, and scraping of the resin coating layer 3 is avoided even in a severer process. In addition, at lubricant components content of 1.5 mass% or less, the resin coating layer 3 remains rigid, and scraping of the resin coating layer 3 is avoided even in a severer process. The lubricant components content is preferably 0.020 mass% or more and preferably 0.80% mass% or less.

The lubricant components contained in the resin coating layer 3 is preferably organic lubricants. Examples of the organic lubricants include polyolefins such as polyethylene and polypropylene, modified polyolefins such as acid-modified polyethylene, acid-modified polypropylene, polyethylene oxide, and polypropylene oxide, aliphatic acids and esters thereof such as stearic acid and stearate, and natural wax such as carnauba wax.

The resin coating layer 3 is in some cases required to appear white in order to enhance designability after printing. In such a case, the resin coating layer 3 may contain 30 mass% or less of inorganic pigments. The inorganic pigments content is preferably 10 mass% or more and preferably 25 mass% or less. The inorganic pigments content is more preferably 12 mass% or more and the inorganic pigments content is more preferably 22 mass% or less. At an inorganic pigments content of 10 mass% or more, a more excellent whiteness is obtained after processing. At an inorganic pigments content exceeding 30 mass%, issues related to the adhesion between the metal sheet 2 and the resin coating layer 3 and workability of the resin coating layer 3 may arise during forming that involves a high degree of processing.

Examples of the inorganic pigments include titanium oxide, alumina, calcium carbonate, and barium sulfate. The inorganic pigments contained in the resin coating layer 3 is not particularly limited but is preferably titanium oxide. In particular, rutile type titanium oxide having a purity of 90% or more is preferable since dispersibility is more excellent during mixing with the resin material.

Here, as long as the purpose of the present invention is not obstructed, the resin coating layer 3 may contain other additives as needed. Examples of the additives include an anti-blocking agent, a fluorescent whitening agent, an antioxidant, a heat stabilizer, a UV absorber, and an antistatic material. In particular, when whiteness is to be improved, addition of a fluorescent whitening agent is effective.

As illustrated in Fig. 2, the resin coating layer 3 may have an at least three-layer structure that includes an outermost surface layer 3a, an intermediate layer 3b, and a bottom layer 3c. In this case, the outermost surface layer 3a and the bottom layer 3c preferably each have a thickness of 1.0 µm or more and 5.0 µm or less. The thickness is more preferably 1.5 µm or more and more preferably 4.0 µm or less, and is yet more preferably 2.0 µm or more and yet more preferably 3.0 µm or less. The thickness of the intermediate layer 3b is preferably 6.0 µm or more and 30 µm or less. The thickness is more preferably 8.0 µm or more and more preferably 25 µm or less, and is yet more preferably 10 µm or more and yet more preferably 20 µm or less.

When inorganic pigments is added to the resin coating layer 3, the outermost surface layer 3a may become brittle and the resin coating layer 3 may thereby become fractured or scraped if the inorganic pigments content in the outermost surface layer 3a is large; thus, the inorganic pigments content in the outermost surface layer 3a is preferably 0 mass% or more and 2.0 mass% or less. Furthermore, when the inorganic pigments content in the bottom layer 3c is large, adhesion between the resin coating layer 3 and the metal sheet may decrease; thus, the inorganic pigments content in the bottom layer 3c is preferably 0 mass% or more and 2.0 mass% or less. From the viewpoint of securely obtaining whiteness after processing, the inorganic pigments content in the intermediate layer 3b is preferably 10 mass% or more and 30 mass% or less.

When the outermost surface layer 3a and the bottom layer 3c have a small thickness, the resin coating layer 3 may not exhibit sufficient gloss and may become fractured or scraped. Meanwhile, when the outermost surface layer 3a and the bottom layer 3c have a large thickness, increasing the thickness of the intermediate layer 3b or increasing the inorganic pigments content in the intermediate layer 3b becomes necessary to securely obtain whiteness, and this is not preferable from the viewpoints of economy and workability. Thus, preferably, the thickness of the outermost surface layer 3a and the bottom layer 3c is 1.0 µm or more and 5.0 µm or less, the thickness of the intermediate layer 3b is 6.0 µm or more and 30 µm or less, the outermost surface layer 3a and the bottom layer 3c each contain 0 mass% or more and 2.0 mass% or less of inorganic pigments, and the intermediate layer 3b contains 10 mass% or more and 30 mass% or less of inorganic pigments.

The resin material forming the resin coating layer 4 is preferably a polyester containing 90 mol% or more of an ethylene terephthalate unit constituting polyethylene terephthalate formed of terephthalic acid as a carboxylic acid component and ethylene glycol as a glycol component.

### EXAMPLES

A 0.22 mm-thick tin free steel (TFS, metallic Cr layer: 120 mg/m², Cr oxide layer: 10 mg/m² on a metallic Cr basis, temper: T3CA) was used as a metal sheet, and resin coating layers indicated in Tables 1 to 4 were formed by a film lamination method (film thermal melting bonding method). In Examples 1 to 30 and Comparative Example 7, the metal sheet was heated to a temperature 20 to 40°C higher than the melting point of the resin coating layer, a film formed by a biaxial stretching method was thermally press-bonded onto the metal sheet by using a laminate roll, and the resulting metal sheet was held at a temperature higher than or equal to the melting onset temperature of the resin coating layer on the container outer surface side for 0.50 to 3.0 seconds and then cooled with water to coat both surfaces of the metal sheet with resin coating layers. In Examples 1 to 6 and Comparative Examples 8 to 12, the time for which the metal sheet was held at a temperature higher than or equal to the melting onset temperature of the resin coating layer on the container outer surface side after thermal press-bonding of the films was set to less than 0.50 seconds, and then water cooling was performed to coat both surfaces of the metal sheet with resin coating layers.

For each of the obtained resin-coated metal sheets for containers, the inorganic additive content (the inorganic additive refers to inorganic pigments and inorganic additives among additives other than the inorganic pigments), the mobile amorphous content, and the crystalline content in the resin coating layer positioned on the container outer surface side were measured by the methods described below.

### (1) Inorganic additive content

A resin-coated metal sheet was immersed at room temperature in a concentrated hydrochloric acid (12 mol/L)/distilled water (1:1) mixed solution to dissolve the metal surfaces and remove the resin coating layer positioned on the container outer surface side from the metal sheet. Subsequently, the removed resin coating layer was thoroughly washed with distilled water and then subjected to vacuum drying. The dried resin coating layer was subjected to thermogravimetric determination by using a thermogravimetric apparatus from room temperature to 800°C at an air flow rate of 300 mL/minute and a heating rate of 10°C/minute. From the results of the thermogravimetric determination, the ratio of the weight at 800°C to the weight at room temperature was assumed to be the inorganic additive content. The inorganic additive content was calculated from the following formula (1). Inorganic additive content [%] = weight at 800°C [mg]/weight at room temperature [mg] × 100

### (2) Mobile amorphous content

A resin-coated metal sheet was immersed at room temperature in a concentrated hydrochloric acid (12 mol/L)/distilled water (1:1) mixed solution to dissolve the metal surfaces and remove the resin coating layer positioned on the container outer surface side from the metal sheet. Subsequently, the removed resin coating layer was thoroughly washed with distilled water and then subjected to vacuum drying. The dried resin coating layer was subjected to temperature-modulated differential scanning calorimetry from 0°C to 300°C at a nitrogen gas flow rate of 30 mL/minute, an average heating rate of 2°C/minute, a modulation amplitude of ±0.5°C, and a modulation cycle of 40 seconds. The measurement results of reversing heat flow obtained from the temperature-modulated differential scanning calorimetry were used to calculate the difference in specific heat between before and after the glass transition point that existed between 50°C to 87.5°C, and the mobile amorphous content was calculated from the following formula (2). The inorganic additive content determined by the method described above was used as the inorganic additive content. Mobile amorphous content [%] = difference in specific heat between before and after glass transmition point [J/(g·°C)] × 100/(100 - inorganic additive content [%])/0.405 [J/(g · ̊C) ] × 100

### (3) Crystalline content

A resin-coated metal sheet was immersed at room temperature in a concentrated hydrochloric acid (12 mol/L)/distilled water (1:1) mixed solution to dissolve the metal surfaces and remove the resin coating layer positioned on the container outer surface side from the metal sheet. Subsequently, the removed resin coating layer was thoroughly washed with distilled water and then subjected to vacuum drying. The dried resin coating layer was subjected to temperature-modulated differential scanning calorimetry from 0°C to 300°C at a nitrogen gas flow rate of 30 mL/minute, an average heating rate of 2°C/minute, a modulation amplitude of ±0.5°C, and a modulation cycle of 40 seconds. The measurement results of the total heat flow obtained by the temperature-modulated differential scanning calorimetry were used to determine the heat of crystallization from the area of the crystallization peak that existed between 87.5°C to 175°C and the heat of melting determined from the area of the melting peak that existed between 200°C and 275°C, and the heat of crystallization and the heat of melting were used to calculate the crystalline content from the following formula (3). The inorganic additive content determined by the method described above was used as the inorganic additive content. Crystalline content [%] = (heat of melting [J/g] - heat of crystallization [J/g]) × 100/100 - inorganic additive content [%]) / 140.2 [J/g] × 100

For the resin-coated metal sheets for containers of Examples 1 to 30 and Comparative Examples 1 to 12, the formability and appearance after heat treatment were evaluated by the following methods.

### (1) Formability

Paraffin wax was applied to each of the resin-coated metal sheets for containers obtained in Examples 1 to 30 and Comparative Examples 1 to 12, and then a disk having a diameter of 180 mm was punched out. This disk was drawn by a cupping press machine and then subjected to two-step redrawing and one-step ironing to form a can having an inner diameter of 52 mm and a can height of 163 mm. The surface of the resin coating layer on the outer surface side of the formed can was observed with naked eye, and formability was evaluated according to the following standards.
Evaluation "⊙⊙": No scraping was observed.
Evaluation "⊙": Scraping was found at a height of within 2 mm from the can flange. No practical issues arise.
Evaluation "O": Scraping was found at a height of more than 2 mm but not more than 5 mm from the can flange. No practical issues arise.
Evaluation "Δ": Scraping was found at a height of more than 5 mm but not more than 20 mm from the can flange. Practical issues arise.

### (2) Appearance after heat treatment

Paraffin wax was applied to each of the resin-coated metal sheets for containers according to Examples 1 to 30 and Comparative Examples 1 to 12, and then a disk having a diameter of 180 mm was punched out. This disk was drawn by a cupping press machine and then subjected to two-step redrawing and one-step ironing to form a can having an inner diameter of 52 mm and a can height of 163 mm. The obtained can body was heated in a hot-air drying furnace under conditions that the can body temperature reached 250°C in 90 seconds, and then quenched with cool air. The resin coating layer on the can outer surface after cooling was observed with naked eye, and appearance after heat treatment was evaluated according to the following standards.
Evaluation "O": No wrinkle defects were observed.
Evaluation "O": Wrinkle defects were observed in the range of 15 mm from the can flange. No practical issues arise.
Evaluation "Δ": Wrinkle defects were observed in the range of more than 15 mm to 50 mm from the can flange. Practical issues arise.
Evaluation "×": Wrinkle defects were observed in the range more than 50 mm from the can flange. Practical issues arise.

Table 5 indicates the evaluation results of the formability and the appearance after the heat treatment.

**[Table 1]**

| | Resin coating layer on container outer surface side | | | | | | | | Resin coating layer on container inner surface side | |
|---|---|---|---|---|---|---|---|---|---|---|
| | Resin composition [mol%] | Thickness [µm] | Inorganic pigment [mass%] | Type of inorganic pigment | Mobile amorphous content [%] | Crystalline content [%] | Lubricant component | Amount of lubricant component added [mass%] | Resin composition [mol%] | Thickness [µm] |
| Example 1 | Ethylene terephthalate 100 | 20 | 14 | Titanium oxide | 85 | 11 | Carnauba | 0.2 | Ethylene terephthalate 90 | 20 |
| | | | | | | | | | Ethylene isophthalate 10 | |
| Example 2 | Ethylene terephthalate 100 | 20 | 16 | Titanium oxide | 89 | 7 | Carnauba | 1.2 | Ethylene terephthalate 90 | 20 |
| | | | | | | | | | Ethylene isophthalate 10 | |
| Example 3 | Ethylene terephthalate 96 | 20 | 0 | - | 89 | 8 | Acid-modified polyethylene | 0.4 | Ethylene terephthalate 90 | 20 |
| | Ethylene isophthalate 4 | | | | | | | | Ethylene isophthalate 10 | |
| Example 4 | Ethylene terephthalate 96 | 20 | 16 | Titanium oxide | 80 | 14 | Acid-modified polyethylene | 0.5 | Ethylene terephthalate 90 | 20 |
| | Ethylene isophthalate 4 | | | | | | | | Ethylene isophthalate 10 | |
| Example 5 | Ethylene terephthalate 96 | 20 | 16 | Titanium oxide | 80 | 15 | - | - | Ethylene terephthalate 90 | 20 |
| | Ethylene isophthalate 4 | | | | | | | | Ethylene isophthalate 10 | |
| Example 6 | Ethylene terephthalate 96 | 20 | 16 | Titanium oxide | 83 | 11 | Acid-modified polyethylene | 0.5 | Ethylene terephthalate 90 | 20 |
| | Ethylene isophthalate 4 | | | | | | | | Ethylene isophthalate 10 | |
| Example 7 | Ethylene terephthalate 96 | 20 | 22 | Titanium oxide | 85 | 8 | Polyethylene | 0.2 | Ethylene terephthalate 90 | 20 |
| | Ethylene isophthalate 4 | | | | | | | | Ethylene isophthalate 10 | |
| Example 8 | Ethylene terephthalate 96 | 20 | 16 | Titanium oxide | 85 | 7 | Acid-modified polyethylene | 0.5 | Ethylene terephthalate 90 | 20 |
| | Ethylene isophthalate 4 | | | | | | | | Ethylene isophthalate 10 | |
| Example 9 | Ethylene terephthalate 96 | 20 | 16 | Titanium oxide | 85 | 9 | Polyethylene | 1.5 | Ethylene terephthalate 90 | 20 |
| | Ethylene isophthalate 4 | | | | | | | | Ethylene isophthalate 10 | |
| Example 10 | Ethylene terephthalate 96 | 20 | 16 | Titanium oxide | 89 | 7 | Acid-modified polyethylene | 0.4 | Ethylene terephthalate 90 | 20 |
| | Ethylene isophthalate 4 | | | | | | | | Ethylene isophthalate 10 | |
| Example 11 | Ethylene terephthalate 96 | 20 | 16 | Titanium oxide | 94 | 4 | Acid-modified polyethylene | 0.6 | Ethylene terephthalate 90 | 20 |
| | Ethylene isophthalate 4 | | | | | | | | Ethylene isophthalate 10 | |
| Example 12 | Ethylene terephthalate 96 | 20 | 16 | Titanium oxide | 98 | 2 | Acid-modified polyethylene | 0.5 | Ethylene terephthalate 90 | 20 |
| | Ethylene isophthalate 4 | | | | | | | | Ethylene isophthalate 10 | |
| Example 13 | Ethylene terephthalate 96 | 20 | 30 | Titanium oxide | 89 | 6 | Acid-modified polyethylene | 0.5 | Ethylene terephthalate 90 | 20 |
| | Ethylene isophthalate 4 | | | | | | | | Ethylene isophthalate 10 | |
| Example 14 | Ethylene terephthalate 90 | 20 | 16 | Titanium oxide | 85 | 8 | Polyethylene | 0.8 | Ethylene terephthalate 90 | 20 |
| | Ethylene isophthalate 10 | | | | | | | | Ethylene isophthalate 10 | |
| Example 15 | Ethylene terephthalate 90 | 20 | 16 | Titanium oxide | 87 | 11 | Acid-modified polyethylene | 1.6 | Ethylene terephthalate 90 | 20 |
| | Ethylene isophthalate 10 | | | | | | | | Ethylene isophthalate 10 | |
| Example 16 | Ethylene terephthalate 90 | 20 | 32 | Titanium oxide | 86 | 10 | Polyethylene | 0.4 | Ethylene terephthalate 90 | 20 |
| | Ethylene isophthalate 10 | | | | | | | | Ethylene isophthalate 10 | |
| Example 17 | Ethylene terephthalate 96 | 20 | 0 | - | 88 | 10 | - | - | Ethylene terephthalate 90 | 20 |
| | Ethylene isophthalate 4 | | | | | | | | Ethylene isophthalate 10 | |
| Example 18 | Ethylene terephthalate 96 | 20 | 15 | Alumina | 87 | 10 | Polyethylene | 0.4 | Ethylene terephthalate 90 | 20 |
| | Ethylene isophthalate 4 | | | | | | | | Ethylene isophthalate 10 | |

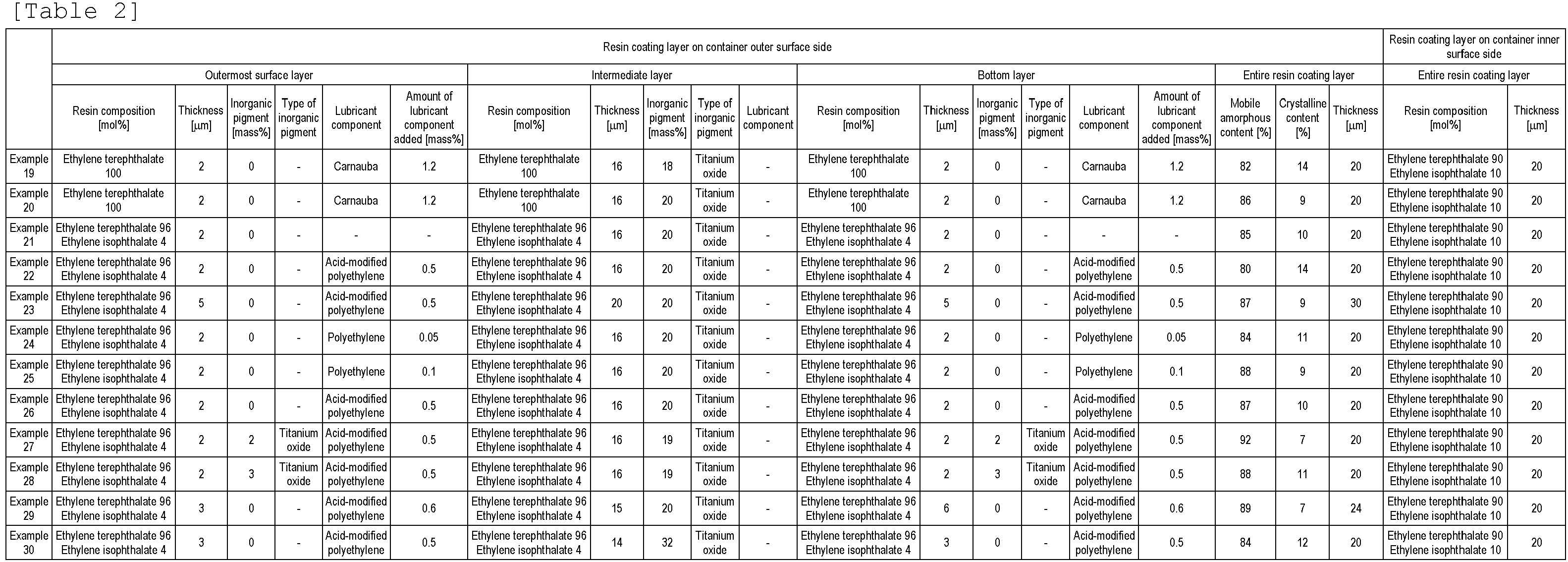

**[Table 3]**

| | Resin coating layer on container outer surface side | | | | | | | | Resin coating layer on container inner surface side | |
|---|---|---|---|---|---|---|---|---|---|---|
| | Resin composition [mol%] | Thickness [µm] | Inorganic pigment [mass%] | Type of inorganic pigment | Mobile amorphous content [%] | Crystalline content [%] | Lubricant component | Amount of lubricant component added [mass%] | Resin composition [mol%] | Thickness [µm] |
| Comparative Example 1 | Ethylene terephthalate 100 | 20 | 16 | Titanium oxide | 78 | 13 | Carnauba | 1.2 | Ethylene terephthalate 90 | 20 |
| | | | | | | | | | Ethylene isophthalate 10 | |
| Comparative Example 2 | Ethylene terephthalate 96 | 20 | 16 | Titanium oxide | 70 | 20 | Acid-modified polyethylene | 0.5 | Ethylene terephthalate 90 | 20 |
| | Ethylene isophthalate 4 | | | | | | | | Ethylene isophthalate 10 | |
| Comparative Example 3 | Ethylene terephthalate 96 | 20 | 16 | Titanium oxide | 74 | 16 | Acid-modified polyethylene | 0.5 | Ethylene terephthalate 90 | 20 |
| | Ethylene isophthalate 4 | | | | | | | | Ethylene isophthalate 10 | |
| Comparative Example 4 | Ethylene terephthalate 96 | 20 | 16 | Titanium oxide | 76 | 13 | Acid-modified polyethylene | 0.5 | Ethylene terephthalate 90 | 20 |
| | Ethylene isophthalate 4 | | | | | | | | Ethylene isophthalate 10 | |
| Comparative Example 5 | Ethylene terephthalate 96 | 20 | 16 | Titanium oxide | 77 | 11 | - | - | Ethylene terephthalate 90 | 20 |
| | Ethylene isophthalate 4 | | | | | | | | Ethylene isophthalate 10 | |
| Comparative Example 6 | Ethylene terephthalate 96 | 20 | 16 | Titanium oxide | 79 | 13 | Acid-modified polyethylene | 0.5 | Ethylene terephthalate 90 | 20 |
| | Ethylene isophthalate 4 | | | | | | | | Ethylene isophthalate 10 | |
| Comparative Example 7 | Ethylene terephthalate 88 | 20 | 16 | Titanium oxide | 80 | 14 | - | - | Ethylene terephthalate 90 | 20 |
| | Ethylene isophthalate 12 | | | | | | | | Ethylene isophthalate 10 | |

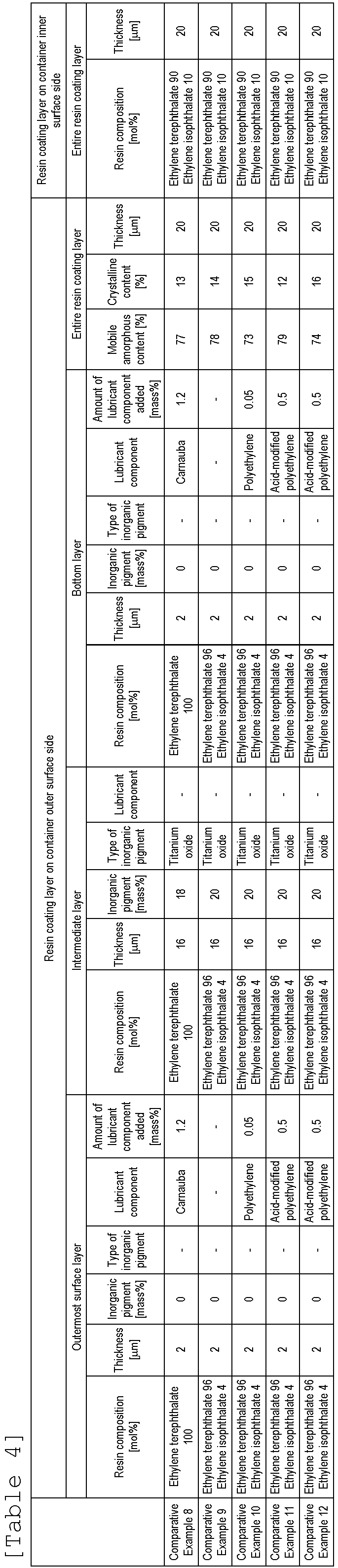

**[Table 5]**

| | Formability | Appearance after heat treatment |
|---|---|---|
| Example 1 | ⊙⊙ | ⊙ |
| Example 2 | ⊙⊙ | ⊙ |
| Example 3 | ⊙⊙ | ⊙ |
| Example 4 | ⊙⊙ | ○ |
| Example 5 | ○ | ○ |
| Example 6 | ⊙⊙ | ○ |
| Example 7 | ⊙⊙ | ⊙ |
| Example 8 | ⊙⊙ | ⊙ |
| Example 9 | ○ | ⊙ |
| Example 10 | ⊙⊙ | ⊙ |
| Example 11 | ⊙⊙ | ⊙ |
| Example 12 | ⊙⊙ | ⊙ |
| Example 13 | ⊙ | ⊙ |
| Example 14 | ⊙ | ⊙ |
| Example 15 | ○ | ⊙ |
| Example 16 | ○ | ⊙ |
| Example 17 | ○ | ⊙ |
| Example 18 | ⊙⊙ | ⊙ |
| Example 19 | ⊙⊙ | ○ |
| Example 20 | ⊙⊙ | ⊙ |
| Example 21 | ○ | ⊙ |
| Example 22 | ⊙⊙ | ⊙ |
| Example 23 | ○ | ⊙ |
| Example 24 | ⊙ | ○ |
| Example 25 | ⊙⊙ | ⊙ |
| Example 26 | ⊙⊙ | ⊙ |
| Example 27 | ⊙⊙ | ⊙ |
| Example 28 | ⊙ | ⊙ |
| Example 29 | ○ | ⊙ |
| Example 30 | ○ | ○ |
| Comparative Example 1 | ⊙⊙ | Δ |
| Comparative Example 2 | ⊙⊙ | × |
| Comparative Example 3 | ⊙⊙ | × |
| Comparative Example 4 | ⊙⊙ | Δ |
| Comparative Example 5 | ○ | Δ |
| Comparative Example 6 | ⊙⊙ | Δ |
| Comparative Example 7 | Δ | ○ |
| Comparative Example 8 | ⊙⊙ | Δ |
| Comparative Example 9 | ○ | Δ |
| Comparative Example 10 | ⊙ | × |
| Comparative Example 11 | ⊙⊙ | Δ |
| Comparative Example 12 | ⊙⊙ | × |

As indicated in Table 5, the resin-coated metal sheets for container use in Examples 1 to 30 had excellent formability and appearance after the heat treatment whereas the evaluation results of the appearance after the heat treatment were insufficient in Comparative Examples 1 to 6 and 8 to 12. In Comparative Example 7, the evaluation result of the formability was insufficient.

### Reference Signs List

- 1: resin-coated metal sheet for containers
- 2: metal sheet
- 3, 4: resin coating layer
- 3a: outermost surface layer
- 3b: intermediate layer
- 3c: bottom layer

## Claims

1. A resin-coated metal sheet for containers, the resin-coated metal sheet comprising a metal sheet and a resin coating layer on at least one surface of the metal sheet, wherein the resin coating layer on the at least one surface contains a resin material that contains 90 mol% or more of an ethylene terephthalate unit and that has a mobile amorphous content of 80% or more.

2. The resin-coated metal sheet for containers according to Claim 1, wherein the resin coating layer on the at least one surface contains 0.010 mass% or more and 1.5 mass% or less of lubricant components.

3. The resin-coated metal sheet for containers according to Claim 1 or 2, wherein the resin coating layer on the at least one surface contains 30 mass% or less of inorganic pigments.

4. The resin-coated metal sheet for containers according to Claim 3, wherein the resin coating layer on the at least one surface has a structure formed of at least three layers, which are an outermost surface layer, an intermediate layer, and a bottom layer, the outermost surface layer and the bottom layer each have a thickness of 1.0 µm or more and 5.0 µm or less, the intermediate layer has a thickness of 6.0 µm or more and 30 µm or less, the outermost surface layer and the bottom layer each contain 0 mass% or more and 2.0 mass% or less of the inorganic pigments, and the intermediate layer contains 10 mass% or more and 30 mass% or less of the inorganic pigments.

## Patentansprüche

1. Harzbeschichtetes Metallblech für Behälter, wobei das harzbeschichtete Metallblech ein Metallblech und eine Harzbeschichtungsschicht auf mindestens einer Oberfläche des Metallblechs umfasst, wobei die Harzbeschichtungsschicht auf der mindestens einen Oberfläche ein Harzmaterial enthält, das 90 mol-% oder mehr einer Ethylenterephthalateinheit enthält und das einen mobilen amorphen Gehalt von 80 % oder mehr aufweist.

2. Harzbeschichtetes Metallblech für Behälter gemäß Anspruch 1, wobei die Harzbeschichtungsschicht auf der mindestens einen Oberfläche 0,010 Masse-% oder mehr und 1,5 Masse-% oder weniger Schmierstoffkomponenten enthält.

3. Harzbeschichtetes Metallblech für Behälter gemäß Anspruch 1 oder 2, wobei die Harzbeschichtungsschicht auf der mindestens einen Oberfläche 30 Masse-% oder weniger anorganische Pigmente enthält.

4. Harzbeschichtetes Metallblech für Behälter gemäß Anspruch 3, wobei die Harzbeschichtungsschicht auf der mindestens einen Oberfläche eine Struktur aufweist, die aus mindestens drei Schichten gebildet ist, die eine äußerste Oberflächenschicht, eine Zwischenschicht und eine untere Schicht sind, wobei die äußerste Oberflächenschicht und die untere Schicht jeweils eine Dicke von 1,0 µm oder mehr und 5,0 µm oder weniger aufweisen, die Zwischenschicht eine Dicke von 6,0 µm oder mehr und 30 µm oder weniger aufweist, die äußerste Oberflächenschicht und die untere Schicht jeweils 0 Masse-% oder mehr und 2,0 Masse-% oder weniger der anorganischen Pigmente enthalten und die Zwischenschicht 10 Masse-% oder mehr und 30 Masse-% oder weniger der anorganischen Pigmente enthält.

## Revendications

1. Plaque métallique revêtue de résine pour récipients, la plaque métallique revêtue de résine comprenant une plaque métallique et une couche de revêtement de résine sur au moins une surface de la plaque métallique, dans laquelle la couche de revêtement de résine sur la au moins une surface contient un matériau de résine qui contient 90 % en mole ou plus d'une unité d'éthylène térephtalate et qui présente une quantité de phase amorphe mobile de 80 % ou plus.

2. Plaque métallique revêtue de résine pour récipients selon la revendication 1, dans laquelle la couche de revêtement de résine sur la au moins une surface contient 0,010 % en masse ou plus et 1,5 % en masse ou moins de composants lubrifiants.

3. Plaque métallique revêtue de résine pour récipients selon la revendication 1 ou revendication 2, dans laquelle la couche de revêtement de résine sur la au moins une surface contient 30 % en masse ou moins de pigments inorganiques.

4. Plaque métallique revêtue de résine pour récipients selon la revendication 3, dans laquelle la couche de revêtement de résine sur la au moins une surface présente une structure formée d'au moins trois couches, qui sont une couche de surface la plus extérieure, une couche intermédiaire et une couche de fond, la couche de surface la plus extérieure et la couche de fond présentent chacune une épaisseur de 1,0 µm ou plus et de 5,0 µm ou moins, la couche intermédiaire présente une épaisseur de 6,0 µm ou plus et de 30 µm ou moins, la couche de surface la plus extérieure et la couche de fond contiennent chacune 0 % en masse ou plus et 2,0 % en masse ou moins des pigments inorganiques, et la couche intermédiaire contient 10 % en masse ou plus et 30 % en masse des pigments inorganiques.
